# EUROPÄISCHE PATENTANMELDUNG

(11) **EP 3 354 440 A1**
(43) Veröffentlichungstag der Anmeldung: **01.08.2018**
(21) Anmeldenummer: 17153396.1
(22) Anmeldetag: 26.01.2017
(51) Int. Cl.: B29C 47/08, B29C 47/00, B29C 47/92, B29B 9/06

(54) **VERFAHREN ZUM AUSTRAGEN EINER POLYMERSCHMELZE MITTELS EINES ANFAHRVENTILS, SOWIE ANFAHRVENTIL**

(71) Anmelder: Coperion GmbH, 70469 Stuttgart (DE)
(72) Erfinder: Tratnik, Tomi, 71634 Ludwigsburg (DE)
(74) Vertreter: Rau, Schneck & Hübner Patentanwälte Rechtsanwälte PartGmbB

(57) **Zusammenfassung**

Eine Anfahrventil-Drossel-Vorrichtung (4) umfasst zum Austragen einer Schmelze (23) aus einer Schneckenmaschine (3) ein Gehäuse (24) mit einer darin ausgebildeten Gehäuseausnehmung (25). In der Gehäuseausnehmung (25) ist ein Ventil-Drossel-Schwenkkörper (26) um eine Schwenkachse (28) verschwenkbar angeordnet. In dem Gehäuse (24) sind ein Eintrittskanal (29) sowie ein erster Austragskanal (31) und ein zweiter Austragskanal (38) ausgebildet. In einer Anfahr-Schwenkstellung verbindet ein in dem Ventil-Drossel-Schwenkkörper (26) ausgebildeter erster Durchgangskanal (30) den Eintrittskanal (29) mit dem ersten Austragskanal (31). Demgegenüber verbindet in einer Betriebs-Schwenkstellung ein in dem Drossel-Ventil-Schwenkkörper (26) ausgebildeter zweiter Durchgangskanal (37) den Eintrittskanal (29) mit dem zweiten Austragskanal (38). Die Anfahrventil-Drossel-Vorrichtung (4) ermöglicht somit ein einfaches, flexibles und zuverlässiges Austragen der Schmelze (23) durch Verschwenken des Ventil-Drossel-Schwenkkörpers (26).

## Beschreibung

Die Erfindung betrifft ein Verfahren zum Austragen einer Schmelze mittels einer Anfahrventil-Drossel-Vorrichtung. Die Erfindung betrifft ferner eine Anfahrventil-Drossel-Vorrichtung zum Austragen einer Schmelze sowie eine Anlage zur Aufbereitung von Schüttgut mit einer derartigen Anfahrventil-Drossel-Vorrichtung.

Aus der DE 38 15 897 C1 (entspricht US 4 984 977 A) ist eine Schneckenmaschine mit einer daran angeflanschten Anfahrventil-Drossel-Vorrichtung bekannt. Die Anfahrventil-Drossel-Vorrichtung umfasst ein Gehäuse mit einer darin ausgebildeten Bohrung, in der ein Anfahrventil-Drossel-Körper angeordnet ist. Der Anfahrventil-Drossel-Körper weist zwei kreiszylindrische Verschließabschnitte auf, zwischen denen ein Drosselkörper angeordnet ist. An einem der Verschließabschnitte ist ein Anfahrventilkörper ausgebildet, der teilzylindrisch ausgebildet ist. Die Anfahrventil-Drossel-Vorrichtung umfasst ferner einen Schwenkantrieb zum Verschwenken des Anfahrventil-Drossel-Körpers um eine Längsachse sowie einen Linearantrieb zum Verschieben des Anfahrventil-Drossel-Körpers in Richtung der Längsachse. In einer ersten Endlage des Linearantriebs wird der Anfahrventil-Drossel-Körper als Anfahrventil betrieben, so dass durch einen Eintrittskanal zugeführte Schmelze durch eine Anfahr-Auslassöffnung ausgetragen wird. In einer zweiten Endlage des Linearantriebs verschließen die Verschließabschnitte die Bohrung, so dass die Anfahr-Auslassöffnung verschlossen ist und der Drosselkörper in einer Drosselstellung ist. Durch Verschwenken des Drosselkörpers um die Längsachse mittels des Schwenkantriebs wird das Austragen der durch den Eintrittskanal zugeführten Schmelze in Richtung eines Austragskanals gedrosselt. Nachteilig ist, dass der Aufbau und die Funktion der Anfahrventil-Drossel-Vorrichtung kompliziert sind.

Der Erfindung liegt die Aufgabe zugrunde, ein Verfahren zu schaffen, das ein einfaches, flexibles und zuverlässiges Austragen einer Schmelze mittels einer Anfahrventil-Drossel-Vorrichtung ermöglicht.

Diese Aufgabe wird durch ein Verfahren mit den Merkmalen des Anspruchs 1 gelöst. Dadurch, dass in dem Ventil-Drossel-Schwenkkörper mindestens zwei Durchgangskanäle ausgebildet sind, ist der Eintrittskanal ausschließlich durch eine Schwenkbewegung des Ventil-Drossel-Schwenkkörpers wahlweise mit einem der mindestens zwei Austragskanäle verbindbar. Der Ventil-Drossel-Schwenkkörper ist zum Verschwenken insbesondere ausschließlich mit einem Antrieb, insbesondere einem elektrischen Antriebsmotor, gekoppelt. In Richtung der Schwenkachse ist der Ventil-Drossel-Schwenkkörper in dem Gehäuse fest, also in Richtung der Schwenkachse nicht verlagerbar, gelagert. In der Anfahr-Schwenkstellung des Ventil-Drossel-Schwenkkörpers verbindet der erste Durchgangskanal den Eintrittskanal mit dem ersten Austragskanal, so dass die Schmelze beispielsweise während eines Anfahrvorgangs einer Schneckenmaschine in der gewünschten Weise ausgeschleust werden kann. Durch ein Verschwenken wird der Ventil-Drossel-Schwenkkörper in einfacher Weise von der Anfahr-Schwenkstellung in die Betriebs-Schwenkstellung überführt. In der Betriebs-Schwenkstellung verbindet der zweite Durchgangskanal den Eintrittskanal mit dem zweiten Austragskanal. Der zweite Austragskanal führt beispielsweise zu einer Granuliervorrichtung, mittels der aus der Schmelze ein Granulat erzeugt wird. Der Aufbau der Anfahrventil-Drossel-Vorrichtung ist einfach und robust. Durch das Verschwenken wird in einfacher und zuverlässiger Weise ein flexibles Austragen der Schmelze, insbesondere aus der Schneckenmaschine, ermöglicht. Die Gehäuseausnehmung und der Ventil-Drossel-Schwenkkörper sind beispielsweise kreiszylinderförmig oder kegelstumpfförmig ausgebildet.

Ein Verfahren nach Anspruch 2 gewährleistet ein einfaches und zuverlässiges Austragen der Schmelze in der Anfahr-Schwenkstellung. Dadurch, dass die Eintrittsöffnung des ersten Durchgangskanals zumindest deckungsgleich, also deckungsgleich oder größer als die Austrittsöffnung des Eintrittskanals ist, wird ein geringer Strömungswiderstand beim Einströmen in den ersten Durchgangskanal erzielt. Dadurch, dass die Austrittsöffnung des ersten Durchgangskanals zumindest deckungsgleich, also deckungsgleich oder größer als die Eintrittsöffnung des ersten Austragskanals ist, wird in entsprechender Weise ein geringer Strömungswiderstand beim Eintritt in den ersten Austragskanal erzielt. Vorzugsweise weisen der Eintrittskanal, der erste Durchgangskanal und/oder der erste Austragskanal übereinstimmende Querschnittsformen und/oder übereinstimmende Querschnittsflächen auf.

Ein Verfahren nach Anspruch 3 gewährleistet ein einfaches und zuverlässiges Austragen der Schmelze in der Betriebs-Schwenkstellung. Dadurch, dass die Eintrittsöffnung des zweiten Durchgangskanals zumindest deckungsgleich, also deckungsgleich oder größer als die Austrittsöffnung des Eintrittskanals ist, wird ein geringer Strömungswiderstand beim Einströmen in den zweiten Durchgangskanal erzielt. Dadurch, dass die Austrittsöffnung des zweiten Durchgangskanals zumindest deckungsgleich, also deckungsgleich oder größer als die Eintrittsöffnung des zweiten Austragskanals ist, wird in entsprechender Weise ein geringer Strömungswiderstand beim Eintritt in den zweiten Austragskanal erzielt. Vorzugsweise weisen der Eintrittskanal, der zweite Durchgangskanal und/oder der zweite Austragskanal übereinstimmende Querschnittsformen und/oder übereinstimmende Querschnittsflächen auf.

Ein Verfahren nach Anspruch 4 gewährleistet ein einfaches und zuverlässiges Austragen der Schmelze. Dadurch, dass die Schmelze in der Übergangs-Schwenkstellung in den ersten Durchgangskanal und den zweiten Durchgangskanal strömt, werden Druckspitzen beim Umschalten von der Anfahr-Schwenkstellung zu der Betriebs-Schwenkstellung vermieden. Ein Einströmen der Schmelze in beide Durchgangskanäle wird beispielsweise dadurch ermöglicht, dass die Eintrittsöffnungen der Durchgangskanäle dicht nebeneinander angeordnet sind, so dass sich diese in der Übergangs-Schwenkstellung mit der Austrittsöffnung des Eintrittskanals überdecken. Der Abstand der Eintrittsöffnungen ist insbesondere kleiner als eine Abmessung bzw. ein Durchmesser der Austrittsöffnung. Weiterhin wird ein Einströmen der Schmelze in beide Durchgangskanäle beispielsweise dadurch ermöglicht, dass zwischen den Durchgangskanälen ein Hilfskanal ausgebildet ist, der seitlich in einen der Durchgangskanäle mündet. In der Übergangs-Schwenkstellung strömt die Schmelze aus dem Eintrittskanal durch den Hilfskanal in den Durchgangskanal, so dass Druckspitzen minimiert werden. Der Hilfskanal weist insbesondere eine kleinere Querschnittsfläche als die Durchgangskanäle auf.

Ein Verfahren nach Anspruch 5 gewährleistet ein einfaches und flexibles Austragen der Schmelze beim Anfahren, beispielsweise einer Schneckenmaschine. Dadurch, dass die Eintrittsöffnung des ersten Durchgangskanals die Austrittsöffnung des Eintrittskanals lediglich teilweise überdeckt und/oder die Austrittsöffnung des ersten Durchgangskanals die Eintrittsöffnung des ersten Austragskanals lediglich teilweise überdeckt, wird beim Anfahren der Schneckenmaschine eine Drosselwirkung erzielt. Die Drosselwirkung ist in der Anfahr-Drossel-Schwenkstellung vom Grad der Überdeckung der jeweiligen Eintrittsöffnung zu der zugehörigen Austrittsöffnung, also vom geringsten Strömungsquerschnitt abhängig und ist durch Verschwenken des Ventil-Drossel-Schwenkkörpers einstellbar. Durch zunehmendes Verschwenken des Ventil-Drossel-Schwenkkörpers aus einer maximalen Durchströmstellung wird der Strömungsquerschnitt verengt und somit die Drosselwirkung erhöht.

Ein Verfahren nach Anspruch 6 gewährleistet ein einfaches und flexibles Austragen der Schmelze im Betrieb, beispielsweise einer Schneckenmaschine. Dadurch, dass die Eintrittsöffnung des zweiten Durchgangskanals die Austrittsöffnung des Eintrittskanals lediglich teilweise überdeckt und/oder die Austrittsöffnung des zweiten Durchgangskanals die Eintrittsöffnung des zweiten Austragskanals lediglich teilweise überdeckt, wird im Betrieb der Schneckenmaschine eine Drosselwirkung erzielt. Die Drosselwirkung ist in der Betriebs-Drossel-Schwenkstellung vom Grad der Überdeckung der jeweiligen Eintrittsöffnung zu der zugehörigen Austrittsöffnung, also vom geringsten Strömungsquerschnitt abhängig und ist durch Verschwenken des Ventil-Drossel-Schwenkkörpers einstellbar. Durch zunehmendes Verschwenken des Ventil-Drossel-Schwenkkörpers aus einer maximalen Durchströmstellung wird der Strömungsquerschnitt verengt und somit die Drosselwirkung erhöht.

Ein Verfahren nach Anspruch 7 ermöglicht in einfacher Weise ein flexibles Austragen der Schmelze. In der Sperr-Schwenkstellung wird der Eintrittskanal mittels eines Verschlussbereichs des Ventil-Drossel-Schwenkkörpers vollständig verschlossen. Der Schmelzestrom wird somit gesperrt. Der mindestens eine Verschlussbereich befindet sich insbesondere zwischen einer Eintrittsöffnung und einer Austrittsöffnung des ersten Durchgangskanals und/oder einer Eintrittsöffnung und einer Austrittsöffnung des zweiten Durchgangskanals und/oder zwischen den Eintrittsöffnungen der Durchgangskanäle und/oder zwischen den Austrittsöffnungen der Durchgangskanäle.

Ein Verfahren nach Anspruch 8 ermöglicht in einfacher Weise ein flexibles Austragen der Schmelze. Durch das Filterelement wird die Schmelze beim Durchströmen des zweiten Durchgangskanals in der Betriebs-Schwenkstellung gefiltert. Hierdurch wird in einfacher und zuverlässiger Weise eine hohe Qualität der ausgetragenen Schmelze gewährleistet. Das Filterelement ist insbesondere auswechselbar in dem zweiten Durchgangskanal angeordnet. Vorzugsweise ist das Filterelement eingangsseitig des zweiten Durchgangskanals angeordnet. Vorzugsweise ist das Filterelement derart angeordnet, dass zwischen diesem und einer Eintrittsöffnung des zweiten Durchgangskanals ein Stauabschnitt ausgebildet ist, in dem sich unerwünschte Verunreinigungen und/oder unerwünschte Partikel in dem zweiten Durchgangskanal stauen können, so dass diese das Verschwenken des Ventil-Drossel-Schwenkkörpers nicht beeinträchtigen und/oder sich nicht in den Eintrittskanal zurückstauen.

Ein Verfahren nach Anspruch 9 gewährleistet ein einfaches und zuverlässiges Austragen der Schmelze. Mit zunehmender Verunreinigung des Filterelements verringert sich die freie Filterfläche und eine Differenz des Schmelzedrucks vor und nach dem Filterelement steigt an. Die aufgestauten Verunreinigungen und/oder Partikel werden auch als Filterkuchen bezeichnet. Übersteigt die Differenz des Schmelzedrucks vor und nach dem Filterelement einen zulässigen Wert, so muss das Filterelement gereinigt werden. Hierzu wird der Ventil-Drossel-Schwenkkörper von der Betriebs-Schwenkstellung in eine Reinigungs-Schwenkstellung überführt, in der die Schmelze aus dem Eintrittskanal durch die vormalige Austrittsöffnung des zweiten Durchgangskanals einströmt, so dass der zweite Durchgangskanal von der Schmelze in einer Rückwärtsrichtung durchströmt wird. Hierdurch wird auch das Filterelement in einer Rückwärtsrichtung durchströmt, so dass der Filterkuchen durch die Schmelze von dem Filterelement abgelöst wird. Die Schmelze mit dem abgelösten Filterkuchen strömt aus der vormaligen Eintrittsöffnung aus dem zweiten Durchgangskanal aus. Vorzugsweise strömt die Schmelze mit dem abgelösten Filterkuchen in den ersten Austragskanal und/oder einen Hilfskanal und wird ausgeschleust. In einer Spül-Schwenkstellung wird der mit ungefilterter Schmelze gefüllte zweite Durchgangskanal anschließend gespült. Hierzu wird die Schmelze aus dem Eintrittskanal über einen Hilfskanal, der in der Spül-Schwenkstellung vor dem Filterelement in den zweiten Durchgangskanal mündet, in den zweiten Durchgangskanal und durch das Filterelement geleitet und zusammen mit der ungefilterten Schmelze durch einen dritten Austragskanal ausgeschleust.

Der Erfindung liegt ferner die Aufgabe zugrunde, eine Anfahrventil-Drossel-Vorrichtung zu schaffen, die ein einfaches, flexibles und zuverlässiges Austragen einer Schmelze ermöglicht.

Diese Aufgabe wird durch eine Anfahrventil-Drossel-Vorrichtung mit den Merkmalen des Anspruchs 10 gelöst. Die Vorteile der erfindungsgemäßen Anfahrventil-Drossel-Vorrichtung entsprechen den bereits beschriebenen Vorteilen des erfindungsgemäßen Verfahrens. Die Anfahrventil-Drossel-Vorrichtung eignet sich insbesondere zum Austragen einer Schmelze aus einer Schneckenmaschine. Die Anfahrventil-Drossel-Vorrichtung umfasst insbesondere eine Steuereinrichtung, die derart ausgebildet ist, dass die Anfahrventil-Drossel-Vorrichtung nach mindestens einem der Ansprüche 1 bis 9 betreibbar ist.

Eine Anfahrventil-Drossel-Vorrichtung nach Anspruch 11 gewährleistet ein einfaches und zuverlässiges Austragen der Schmelze. Dadurch, dass der Abstand von zwei benachbarten Eintrittsöffnungen kleiner als eine Abmessung einer Austrittsöffnung des Eintrittskanals ist, strömt die Schmelze in einer Übergangs-Schwenkstellung zwischen einer Anfahr-Schwenkstellung und einer Betriebs-Schwenkstellung von dem Eintrittskanal in einen ersten Durchgangskanal und in einen benachbarten zweiten Durchgangskanal, so dass Druckspitzen im Eintrittskanal bei einem Übergang in die Betriebs-Schwenkstellung vermieden werden.

Eine Anfahrventil-Drossel-Vorrichtung nach Anspruch 12 gewährleistet ein einfaches und flexibles Austragen der Schmelze. Durch den mindestens einen Verschlussbereich ist ein vollständiges Verschließen des Eintrittskanals möglich, so dass die Schmelze in einer zugehörigen Sperr-Schwenkstellung des Ventil-Drossel-Schwenkkörpers gesperrt ist und nicht aus dem Eintrittskanals austreten kann. Der mindestens eine Verschlussbereich ist insbesondere zwischen einer Eintrittsöffnung und einer Austrittsöffnung eines Durchgangskanals und/oder zwischen den Eintrittsöffnungen zweier benachbarter Durchgangskanäle und/oder zwischen den Austrittsöffnungen zweier benachbarter Durchgangskanäle ausgebildet.

Eine Anfahrventil-Drossel-Vorrichtung nach Anspruch 13 ermöglicht ein einfaches und zuverlässiges Austragen der Schmelze. Beim Durchströmen des Filterelements wird die Schmelze gefiltert, so dass unerwünschte Verunreinigungen und/oder unerwünschte Partikel aus der Schmelze gefiltert werden. Vorzugsweise ist das Filterelement in dem Durchgangskanal angeordnet, der in einer Betriebs-Schwenkstellung des Ventil-Drossel-Schwenkkörpers von der Schmelze durchströmt wird. Das Filterelement ist insbesondere auswechselbar in dem zugehörigen Durchgangskanal angeordnet. Vorzugsweise ist das Filterelement derart in dem zugehörigen Durchgangskanal angeordnet, das stromaufwärts des Filterelements der Durchgangskanal einen Stauabschnitt ausbildet, in dem sich unerwünschte Verunreinigungen und/oder unerwünschte Partikel sammeln bzw. aufstauen können und sich nicht bis in den Eintrittskanal zurückstauen.

Eine Anfahrventil-Drossel-Vorrichtung nach Anspruch 14 gewährleistet ein einfaches und flexibles Austragen der Schmelze. Durch einen Hilfskanal, der zwischen einem ersten Durchgangskanal und einem zweiten Durchgangskanal ausgebildet ist und in mindestens einen der Durchgangskanäle mündet, werden beim Übergang von einer Anfahr-Schwenkstellung zu einer Betriebs-Schwenkstellung Druckspitzen vermieden. Durch einen Hilfskanal, der stromaufwärts und/oder stromabwärts eines Filterelements in den zugehörigen Durchgangskanal mündet, werden eine Reinigung des Filterelements und/oder ein Spülen des Durchgangskanals ermöglicht.

Der Erfindung liegt ferner die Aufgabe zugrunde, eine Anlage zur Aufbereitung von Schüttgut zu schaffen, die ein einfaches, flexibles und zuverlässiges Austragen einer Schmelze aus einer Schneckenmaschine ermöglicht.

Diese Aufgabe wird durch eine Anlage mit den Merkmalen des Anspruchs 15 gelöst. Die Schneckenmaschine ist insbesondere als Mehrwellen-Schneckenmaschine, vorzugsweise als Zweiwellen-Schneckenmaschine ausgebildet. Die Behandlungselementwellen der Schneckenmaschine sind insbesondere gleichsinnig drehantreibbar bzw. drehangetrieben. Die Behandlungselementwellen sind insbesondere einander dichtkämmend ausgebildet. Die Anlage umfasst insbesondere eine Steuereinrichtung, die derart ausgebildet ist, dass die Anfahrventil-Drossel-Vorrichtung nach mindestens einem der Ansprüche 1 bis 9 betreibbar ist.

Weitere Merkmale, Vorteile und Einzelheiten der Erfindung ergeben sich aus der nachfolgenden Beschreibung mehrerer Ausführungsbeispiele. Es zeigen:
- Fig. 1: eine schematische Darstellung einer Anlage zur Aufbereitung von Schüttgut mit einer Mehrwellen-Schneckenmaschine und einer daran angeflanschten Anfahrventil-Drossel-Vorrichtung gemäß einem ersten Ausführungsbeispiel,
- Fig. 2: einen Schnitt durch die Anfahrventil-Drossel-Vorrichtung in Fig. 1 in einer Anfahr-Schwenkstellung,
- Fig. 3: einen Schnitt durch die Anfahrventil-Drossel-Vorrichtung in Fig. 1 in einer Anfahr-Drossel-Schwenkstellung,
- Fig. 4: einen Schnitt durch die Anfahrventil-Drossel-Vorrichtung in Fig. 1 in einer Betriebs-Schwenkstellung,
- Fig. 5: einen Schnitt durch die Anfahrventil-Drossel-Vorrichtung in Fig. 1 in einer Betriebs-Drossel-Schwenkstellung,
- Fig. 6: einen Schnitt durch die Anfahrventil-Drossel-Vorrichtung in Fig. 1 in einer Sperr-Schwenkstellung,
- Fig. 7: einen Schnitt durch eine Anfahrventil-Drossel-Vorrichtung gemäß einem zweiten Ausführungsbeispiel in einer Übergangs-Schwenkstellung,
- Fig. 8: einen Schnitt durch eine Anfahrventil-Drossel-Vorrichtung gemäß einem dritten Ausführungsbeispiel in einer Übergangs-Schwenkstellung,
- Fig. 9: einen Schnitt durch eine Anfahrventil-Drossel-Vorrichtung gemäß einem vierten Ausführungsbeispiel in einer Sperr-Schwenkstellung,
- Fig. 10: einen Schnitt durch eine Anfahrventil-Drossel-Vorrichtung mit einem Filterelement gemäß einem fünften Ausführungsbeispiel in einer Betriebs-Schwenkstellung,
- Fig. 11: einen Schnitt durch die Anfahrventil-Drossel-Vorrichtung in Fig. 10 in einer Reinigungs-Schwenkstellung, und
- Fig. 12: einen Schnitt durch die Anfahrventil-Drossel-Vorrichtung in Fig. 10 in einer Spül-Schwenkstellung.

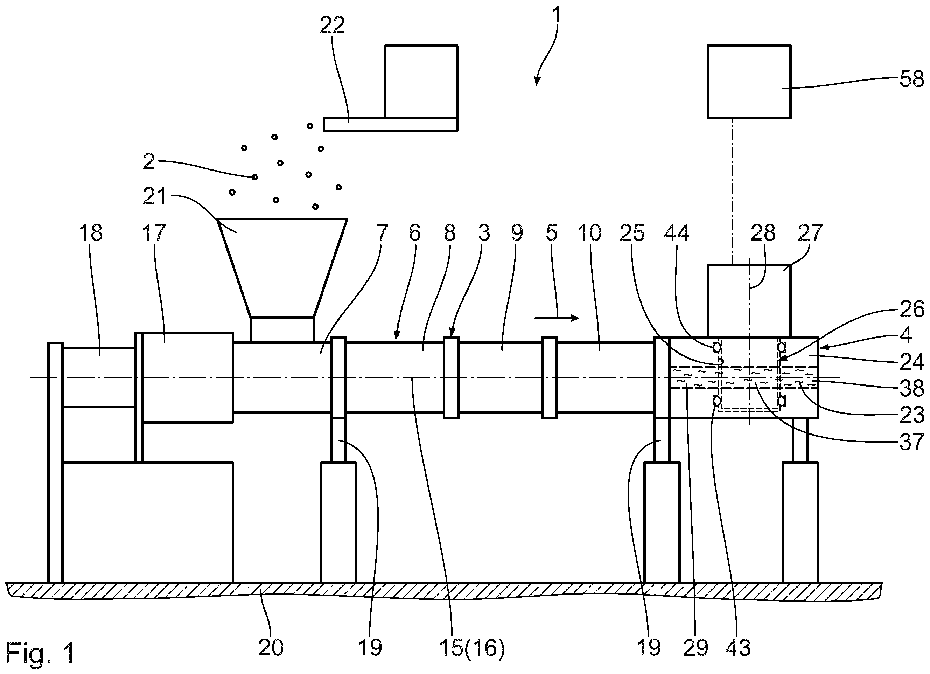

Nachfolgend ist anhand der Fig. 1 bis 6 ein erstes Ausführungsbeispiel der Erfindung beschrieben. Eine Anlage 1 zur Aufbereitung von Schüttgut 2 umfasst eine Mehrwellen-Schneckenmaschine 3 und eine Anfahrventil-Drossel-Vorrichtung 4, die in einer Förderrichtung 5 nach der Mehrwellen-Schneckenmaschine 3 angeordnet ist.

Die Mehrwellen-Schneckenmaschine 3 ist als Zweiwellen-Schneckenmaschine ausgebildet. Die Schneckenmaschine 3 weist ein Gehäuse 6 auf, das mehrere nacheinander angeordnete und aneinander befestigte Gehäuseabschnitte 7, 8, 9, 10 umfasst. In dem Gehäuse 6 sind zwei achsparallele Gehäusebohrungen 11, 12 ausgebildet, die einander durchdringen und im Querschnitt die Form einer liegenden Acht haben. In den Gehäusebohrungen 11, 12 sind zwei einander kämmende Behandlungselementwellen 13, 14 angeordnet und um zugehörige Drehachsen 15, 16 drehantreibbar. Die Behandlungselementwellen 13, 14 werden über ein Verteilergetriebe 17 von einem Antriebsmotor 18 gleichsinnig, also in gleichen Drehrichtungen drehangetrieben. Die Anfahrventil-Drossel-Vorrichtung 4, das Gehäuse 6, das Verteilergetriebe 17 und der Antriebsmotor 18 sind über einen Ständer 19 an einem Boden bzw. Fundament 20 befestigt.

In den ersten als Einzugszone ausgebildeten Gehäuseabschnitt 7 mündet ein Einlasstrichter 21 ein, in den das aufzubereitende Schüttgut 2 über eine Dosiereinrichtung 22 in die Schneckenmaschine 3 zugeführt wird. Die Behandlungselementwellen 13, 14 bilden in der Schneckenmaschine 3 eine Knetzone aus, in der das Schüttgut 2 zu einer Schmelze 23 aufgeschmolzen wird. Die Schmelze 23 wird durch die Anfahrventil-Drossel-Vorrichtung 4 aus der Schneckenmaschine 3 ausgetragen. Die Anfahrventil-Drossel-Vorrichtung 4 ist an den letzten Gehäuseabschnitt 10 angeflanscht.

Die Anfahrventil-Drossel-Vorrichtung 4 umfasst ein Gehäuse 24, in dem eine zylinderförmige Gehäuseausnehmung 25 ausgebildet ist. In der Gehäuseausnehmung 25 ist ein entsprechend zylinderförmig ausgebildeter Ventil-Drossel-Schwenkkörper 26 angeordnet, der mittels eines Antriebs 27 in der Gehäuseausnehmung 25 um eine Schwenkachse 28 verschwenkbar ist. Der Ventil-Drossel-Schwenkkörper 26 ist in Richtung der Schwenkachse 28 fest angeordnet, also nicht verlagerbar.

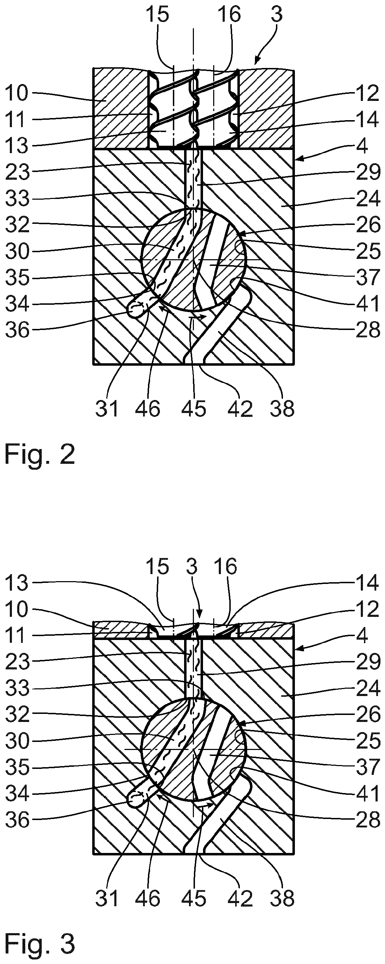

In dem Gehäuse 24 ist ein Eintrittskanal 29 ausgebildet, der die Gehäusebohrungen 11, 12 mit der Gehäuseausnehmung 25 verbindet. Der Eintrittskanal 29 dient zum Zuführen der Schmelze 23 zu dem Ventil-Drossel-Schwenkkörper 26. In dem Ventil-Drossel-Schwenkkörper 26 ist ein erster Durchgangskanal 30 ausgebildet, der den Eintrittskanal 29 in einer Anfahr-Schwenkstellung mit einem ersten Austragskanal 31 verbindet. Die Anfahr-Schwenkstellung ist in Fig. 2 dargestellt. In der Anfahr-Schwenkstellung ist eine Austrittsöffnung 32 des Eintrittskanals 29 deckungsgleich mit einer Eintrittsöffnung 33 des ersten Durchgangskanals 30. Ferner ist in der Anfahr-Schwenkstellung eine Austrittsöffnung 34 des ersten Durchgangskanals 30 deckungsgleich mit einer Eintrittsöffnung 35 des ersten Austragskanals 31. In der Anfahr-Schwenkstellung bilden der Eintrittskanal 29, der erste Durchgangskanal 30 und der erste Austragskanal 31 somit einen ersten Strömungskanal mit einem im Wesentlichen konstanten Strömungsquerschnitt aus. Der erste Austragskanal 31 führt aus dem Gehäuse 24 heraus. Eine Austrittsöffnung 36 des ersten Austragskanals 31 ist an einer dem Fundament 20 zugewandten Unterseite des Gehäuses 24 ausgebildet.

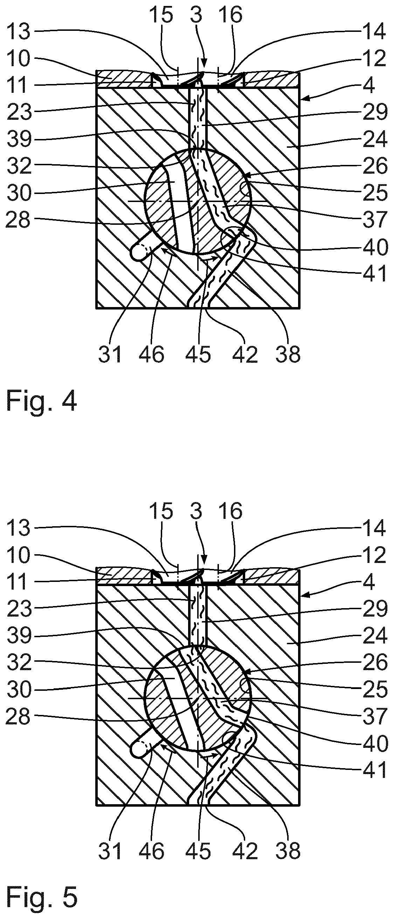

In dem Ventil-Drossel-Schwenkkörper 26 ist ferner ein zweiter Durchgangskanal 37 ausgebildet, der in einer Betriebs-Schwenkstellung den Eintrittskanal 29 mit einem zweiten Austragskanal 38 verbindet. Die Betriebs-Schwenkstellung ist in Fig. 4 dargestellt. Die Austrittsöffnung 32 des Eintrittskanals 29 ist deckungsgleich mit einer Eintrittsöffnung 39 des zweiten Durchgangskanals 37. Ferner ist eine Austrittsöffnung 40 des zweiten Durchgangskanals 37 deckungsgleich mit einer Eintrittsöffnung 41 des zweiten Austragskanals 38. Der Eintrittskanal 29, der zweite Durchgangskanal 37 und der zweite Austragskanal 38 bilden somit in der Betriebs-Schwenkstellung einen zweiten Strömungskanal mit einem im Wesentlichen konstanten Strömungsquerschnitt aus. Der zweite Austragskanal 38 führt aus dem Gehäuse 24 heraus. Eine Austrittsöffnung 42 des zweiten Austragskanals 38 ist an einer stromabwärtigen Seite des Gehäuses 24 ausgebildet. Die aus der Austrittsöffnung 42 austretende Schmelze 23 wird beispielsweise einer Granuliervorrichtung zugeführt.

Der Ventil-Drossel-Schwenkkörper 26 ist durch zwei ringförmige Dichtungen 43, 44 gegenüber dem Gehäuse 24 abgedichtet. Die ringförmigen Dichtungen 43, 44 sind in Richtung der Schwenkachse 28 unterhalb und oberhalb der Austrittsöffnung 32 und der Eintrittsöffnungen 35 und 41 angeordnet. Die Dichtungen 43,44 sind beispielsweise an dem Gehäuse 24 angeordnet.

In der Anfahr-Betriebsstellung wird die durch den Eintrittskanal 29 zugeführte Schmelze 23 durch den ersten Durchgangskanal 30 zu dem ersten Austragskanal 31 geleitet und strömt dort durch die Austrittsöffnung 36 aus. Durch Verschwenken des Ventil-Drossel-Schwenkkörpers 26 in einer ersten Drehrichtung 45 um die Schwenkachse 28 mittels des Antriebs 27 wird die Betriebs-Schwenkstellung eingestellt. In der Betriebs-Schwenkstellung wird die Schmelze 23 aus dem Eintrittskanal 29 über den zweiten Durchgangskanal 37 zu dem zweiten Austrittskanal 38 geleitet.

Fig. 3 zeigt die Anfahrventil-Drossel-Vorrichtung 4 in einer Anfahr-Drossel-Schwenkstellung. Die Anfahr-Drossel-Schwenkstellung wird ausgehend von der Anfahr-Schwenkstellung durch Verschwenken des Ventil-Drossel-Schwenkkörpers 26 in einer Drehrichtung 46 eingestellt. Der Ventil-Drossel-Schwenkkörper 26 wird zur Einstellung der Anfahr-Drossel-Schwenkstellung derart verschwenkt, dass die Austrittsöffnung 32 des Eintrittskanals 29 die Eintrittsöffnung 33 des ersten Durchgangskanals 30 lediglich teilweise überdeckt und die Austrittsöffnung 34 des ersten Durchgangskanals 30 die Eintrittsöffnung 35 des ersten Austragskanals 31 lediglich teilweise überdeckt. Der erste Strömungskanal weist hierdurch einen reduzierten Strömungsquerschnitt auf. Die Drosselwirkung wird durch den Grad des Verschwenkens und den Grad der Reduzierung des Strömungsquerschnitts eingestellt.

In Fig. 5 ist der Ventil-Drossel-Schwenkkörper 26 in einer Betriebs-Drossel-Schwenkstellung gezeigt. Ausgehend von der Betriebs-Schwenkstellung wird die Betriebs-Drossel-Schwenkstellung durch Verschwenken des Ventil-Drossel-Schwenkkörpers 26 in der Drehrichtung 45 eingestellt. Der Ventil-Drossel-Schwenkkörper 26 ist derart verschwenkt, dass die Austrittsöffnung 32 des Eintrittskanals 29 die Eintrittsöffnung 39 des zweiten Durchgangskanals 37 lediglich teilweise überdeckt und die Austrittsöffnung 40 des zweiten Durchgangskanals 37 die Eintrittsöffnung 41 des zweiten Austragskanals 38 lediglich teilweise überdeckt. Der zweite Strömungskanal weist hierdurch einen reduzierten Strömungsquerschnitt auf. Die Drosselwirkung wird durch den Grad des Verschwenkens und den Grad der Reduzierung des Strömungsquerschnitts eingestellt.

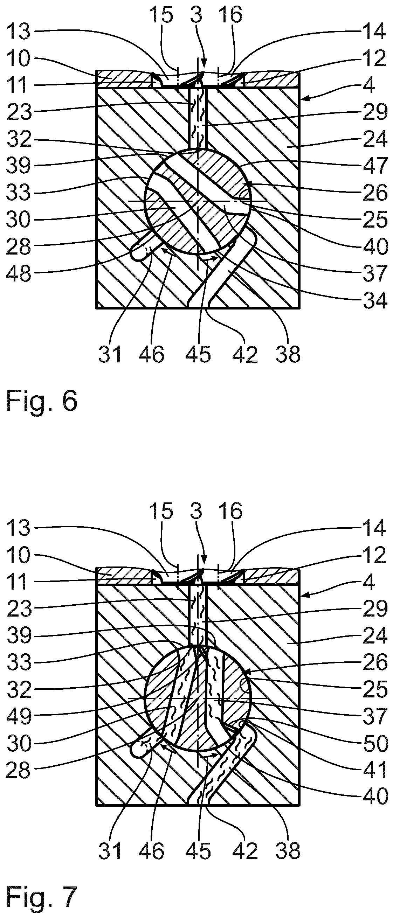

Fig. 6 zeigt den Ventil-Drossel-Schwenkkörper 26 in einer Sperr-Schwenkstellung. In der Sperr-Schwenkstellung ist die Austrittsöffnung 32 des Eintrittskanals 29 durch einen Verschlussbereich 47 des Ventil-Drossel-Schwenkkörpers 26 verschlossen. Der Verschlussbereich 47 ist zwischen der Eintrittsöffnung 39 und der Austrittsöffnung 40 des zweiten Durchgangskanals 37 ausgebildet. Ausgehend von der Betriebs-Schwenkstellung wird die Sperr-Schwenkstellung durch Verschwenken des Ventil-Drossel-Schwenkkörpers 26 in der Drehrichtung 45 eingestellt. In entsprechender Weise weist der Ventil-Drossel-Schwenkkörper 26 einen Verschlussbereich 48 auf, der zwischen der Eintrittsöffnung 33 und der Austrittsöffnung 34 des Durchgangskanals 30 ausgebildet ist.

Nachfolgend ist anhand von Fig. 7 ein zweites Ausführungsbeispiel der Erfindung beschrieben. Im Unterschied zu dem ersten Ausführungsbeispiel sind in dem Ventil-Drossel-Schwenkkörper 26 zwei Hilfskanäle 49, 50 ausgebildet. Ein erster Hilfskanal 49 ist zwischen den Eintrittsöffnungen 33 und 39 ausgebildet und mündet in den zweiten Durchgangskanal 37. Ein zweiter Hilfskanal 50 erstreckt sich ausgehend von dem zweiten Durchgangskanal 37 zwischen der Eintrittsöffnung 39 und der Austrittsöffnung 40. Der Ventil-Drossel-Schwenkkörper 26 befindet sich bei dem Übergang von der Anfahr-Schwenkstellung in die Betriebs-Schwenkstellung in einer Übergangs-Schwenkstellung. Diese Übergangs-Schwenkstellung ist in Fig. 7 gezeigt. In der Übergangs-Schwenkstellung strömt die Schmelze 23 aus dem Eintrittskanal 29 noch durch den ersten Durchgangskanal 30 in den ersten Austragskanal 31. Zusätzlich strömt die Schmelze 23 in der Übergangs-Schwenkstellung aus dem Eintrittskanal 29 über den ersten Hilfskanal 49 in den zweiten Durchgangskanal 37 und von dort über den zweiten Hilfskanal 50 in den zweiten Austragskanal 38. Hierdurch werden Druckspitzen der Schmelze 23 im Eintrittskanal 29 vermieden. Hinsichtlich des weiteren Aufbaus und der weiteren Funktionsweise der Anlage 1 wird auf das vorangegangene Ausführungsbeispiel verwiesen.

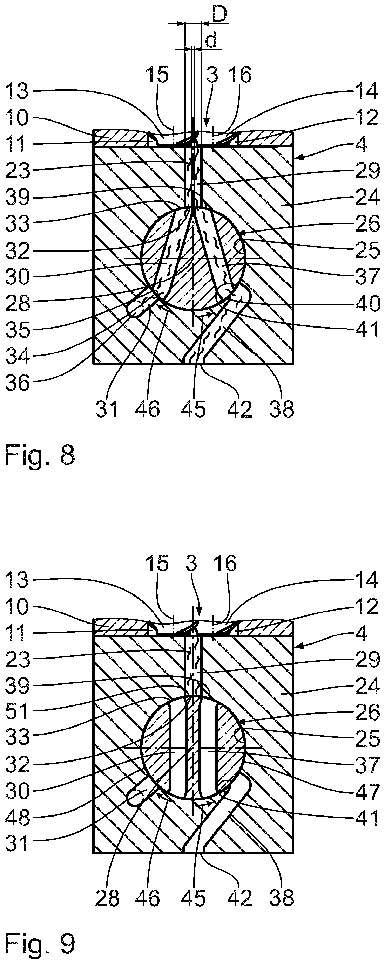

Nachfolgend ist anhand von Fig. 8 ein drittes Ausführungsbeispiel der Erfindung beschrieben. Im Unterschied zu den vorangegangenen Ausführungsbeispielen haben die Eintrittsöffnungen 33 und 39 einen Abstand d voneinander, der kleiner als eine Abmessung D der Austrittsöffnung 32 des Eintrittskanals 29 ist. Hierdurch strömt in der in Fig. 8 gezeigten Übergangs-Schwenkstellung die Schmelze 23 aus dem Eintrittskanal 29 in den ersten Durchgangskanal 30 und den zweiten Durchgangskanal 37 und von dort in den ersten Austragskanal 31 bzw. den zweiten Austragskanal 38. Hinsichtlich des weiteren Aufbaus und der weiteren Funktionsweise der Anlage 1 wird auf die vorangegangenen Ausführungsbeispiele verwiesen.

Nachfolgend ist anhand von Fig. 9 ein viertes Ausführungsbeispiel der Erfindung beschrieben. Im Unterschied zu den vorangegangenen Ausführungsbeispielen bildet der Ventil-Drossel-Schwenkkörper 26 zusätzlich zu den Verschlussbereichen 47, 48 einen dritten Verschlussbereich 51 aus, der zwischen den Eintrittsöffnungen 33 und 39 ausgebildet ist. Fig. 9 zeigt den Ventil-Drossel-Schwenkkörper 26 in einer Sperr-Schwenkstellung, in der der dritte Verschlussbereich 51 den Eintrittskanal 29 verschließt. Hinsichtlich des weiteren Aufbaus und der weiteren Funktionsweise der Anlage 1 wird auf die vorangegangenen Ausführungsbeispiele verwiesen.

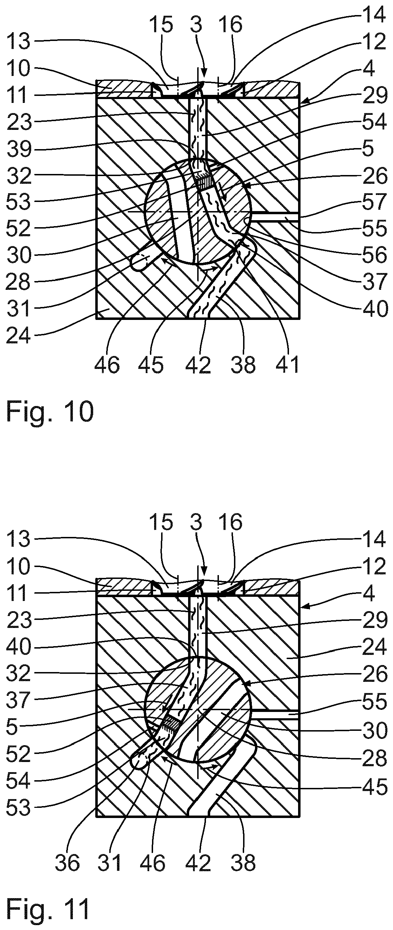

Nachfolgend ist anhand der Fig. 10 bis 12 ein fünftes Ausführungsbeispiel der Erfindung beschrieben. Im Unterschied zu den vorangegangenen Ausführungsbeispielen ist in dem zweiten Durchgangskanal 37 ein Filterelement 52 angeordnet. Das Filterelement 52 ist derart in der Förderrichtung 5 nach der Eintrittsöffnung 39 angeordnet, dass zwischen der Eintrittsöffnung 39 und dem Filterelement 52 ein Stauabschnitt 53 verbleibt. In dem Ventil-Drossel-Schwenkkörper 26 ist ein Hilfskanal 54 ausgebildet, der zwischen der Eintrittsöffnung 39 und der Austrittsöffnung 40 verläuft und im Bereich des Stauabschnitts 53 in den zweiten Durchgangskanal 37 mündet. Weiterhin ist in dem Gehäuse 24 ein dritter Austragskanal 55 ausgebildet, der zwischen dem Eintrittskanal 29 und dem zweiten Austragskanal 38 in dem Gehäuse 24 verläuft. Der dritte Ausgangskanal 55 hat eine Eintrittsöffnung 56 und eine Austrittsöffnung 57.

Fig. 10 zeigt den Ventil-Drossel-Schwenkkörper 26 in der Betriebs-Schwenkstellung. Die Schmelze 23 strömt durch den Eintrittskanal 29 in den zweiten Durchgangskanal 37 und wird dort mittels des Filterelements 52 gefiltert. Die gefilterte Schmelze 23 strömt anschließend in den zweiten Austragskanal 38 und wird durch die Austrittsöffnung 42 ausgetragen. Die in der Schmelze 23 befindlichen Verunreinigungen und unerwünscht großen Partikel werden mittels des Filterelements 52 ausgefiltert, so dass sich diese in dem Stauabschnitt 53 sammeln und dort einen sogenannten Filterkuchen bilden.

Übersteigt die Differenz eines Drucks vor dem Filterelement 52 und eines Drucks nach dem Filterelement 52 einen zulässigen Druckwert, so wird der Ventil-Drossel-Schwenkkörper 26 in eine Reinigungs-Schwenkstellung verschwenkt. Die Reinigungs-Schwenkstellung ist in Fig. 11 gezeigt. Das Verschwenken erfolgt beispielsweise in der Drehrichtung 45. In der Reinigungs-Schwenkstellung verbindet der zweite Durchgangskanal 37 den Eintrittskanal 29 mit dem ersten Austragskanal 31, so dass der zweite Durchgangskanal 37 im Gegensatz zu der Betriebs-Schwenkstellung in einer Rückwärtsrichtung durchströmt wird. Die Förderrichtung 5 entspricht in der Reinigungs-Schwenkstellung der Rückwärtsrichtung. Dies bedeutet, dass der gebildete Filterkuchen stromabwärts des Filterelements 52 angeordnet ist. Aufgrund der durch den zweiten Durchgangskanal 37 strömenden Schmelze 23 wird der Filterkuchen gelöst und durch den Stauabschnitt 53 und den ersten Austragskanal 31 ausgetragen. Das Filterelement 52 wird somit gereinigt.

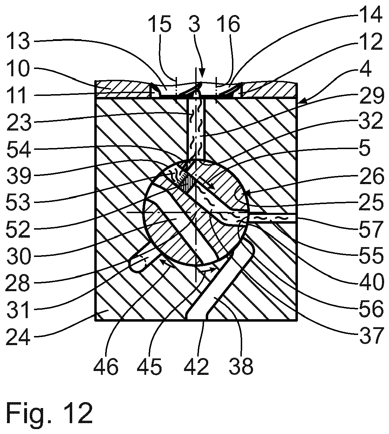

Nach einer erfolgten Reinigung wird der Ventil-Drossel-Schwenkkörper 26 durch Verschwenken in eine Spül-Schwenkstellung überführt. Die Spül-Schwenkstellung ist in Fig. 12 gezeigt. Aufgrund der Reinigung des Filterelements 52 befindet sich in der Spül-Schwenkstellung bzw. in der Betriebs-Schwenkstellung betrachtet stromabwärts des Filterelements 52 in dem zweiten Durchgangskanal 37 ungefilterte Schmelze 23. Diese ungefilterte Schmelze 23 wird in der Spül-Schwenkstellung aus dem zweiten Durchgangskanal 37 durch den dritten Austragskanal 55 ausgetragen. Hierzu ist der Ventil-Drossel-Schwenkkörper 26 in der Spül-Schwenkstellung derart verschwenkt, dass der Hilfskanal 54 den Eintrittskanal 29 mit dem zweiten Durchgangskanal 37 verbindet. In der Spül-Schwenkstellung überdeckt die Austrittsöffnung 40 des zweiten Durchgangskanals 37 zudem die Eintrittsöffnung 56 des dritten Austragskanals 55. Die ungefilterte Schmelze 23 aus dem Eintrittskanal 29 strömt in der Spül-Schwenkstellung durch den Hilfskanal 54 in den Stauabschnitt 53 und von dort durch das Filterelement 52 in den stromabwärts liegenden Abschnitt des zweiten Durchgangskanals 37. Dort verdrängt die gefilterte Schmelze 23 die ungefilterte Schmelze 23 und trägt diese durch den dritten Austragskanal 55 aus. Der zweite Durchgangskanal 37 wird somit gespült und von der ungefilterten Schmelze 23 befreit. Die Spül-Stellung wird beispielsweise durch Verschwenken in der Drehrichtung 46 eingestellt. Nach dem Spülen wird wiederum die in Fig. 10 gezeigte Betriebs-Schwenkstellung eingestellt. Dies erfolgt beispielsweise durch weiteres Verschwenken in der Drehrichtung 46. Hinsichtlich des weiteren Aufbaus und der weiteren Funktionsweise der Anlage 1 wird auf die vorangegangenen Ausführungsbeispiele verwiesen.

Die erfindungsgemäße Anfahrventil-Drossel-Vorrichtung 4 ermöglicht ein einfaches, flexibles und zuverlässiges Austragen der Schmelze 23 aus der Schneckenmaschine 3. Die Anfahrventil-Drossel-Vorrichtung 4 umfasst eine Steuereinrichtung 58, die das Verschwenken des Ventil-Drossel-Schwenkkörpers 26 steuert. Zum Einstellen verschiedener Funktionen muss der Ventil-Drossel-Schwenkkörper 26 lediglich mittels des einzigen Antriebs 27 um die Schwenkachse 28 verschwenkt werden. Eine ungleichmäßige Werkstoffausdehnung des Gehäuses 24 und des Ventil-Drossel-Schwenkkörpers 26 beeinträchtigen die Funktion der Anfahrventil-Drossel-Vorrichtung 4 nicht, da insbesondere keine Linearbewegung des Ventil-Drossel-Schwenkkörpers 26 zur Gewährleistung der Funktion erforderlich ist. Das Gehäuse 24 weist im Bereich der Gehäuseausnehmung 25 insbesondere eine Verschleißschutzschicht auf. Entsprechendes gilt insbesondere auch für den Ventil-Drossel-Schwenkkörper 26. Die jeweilige Verschlussschutzschicht wird beispielsweise durch Nitrieren oder Beschichten hergestellt. Dadurch, dass der Ventil-Drossel-Schwenkkörper 26 lediglich um die Schwenkachse 28 verschwenkt werden muss, ist ein Umschalten der Funktionen einfach, schnell und zuverlässig möglich. Zum Abdichten des Spalts zwischen dem Gehäuse 24 und dem Ventil-Drossel-Schwenkkörper 26 können um die Schwenkachse 28 umlaufende Dichtungen 43, 44 und/oder in Richtung der Schwenkachse 28 verlaufende Dichtungen in dem Gehäuse 24 und/oder in dem Ventil-Drossel-Schwenkkörper 26 angeordnet sein. Beispielsweise können durch axial verlaufende Dichtungen die verschiedenen Funktionen des Ventil-Drossel-Schwenkkörpers 26 zuverlässig sichergestellt werden, da die Schmelze 23 in dem Spalt nicht um die Schwenkachse 28 strömen kann. Weiterhin ist eine Kühlung der Schmelze 23 möglich, um die in den Spalt eintretende Schmelze 23 einzufrieren. Die Schwenkachse 28 kann in vertikaler Richtung und/oder in horizontaler Richtung verlaufen. Der Antrieb 27 kann elektrisch, hydraulisch oder pneumatisch ausgebildet sein.

## Patentansprüche

1. Verfahren zum Austragen einer Schmelze mittels einer Anfahrventil-Drossel-Vorrichtung mit den Schritten:
- Bereitstellen einer Anfahrventil-Drossel-Vorrichtung (4) mit
-- einem Gehäuse (24) und einer darin ausgebildeten Gehäuseausnehmung (25),
-- einem Ventil-Drossel-Schwenkkörper (26),
--- der in der Gehäuseausnehmung (25) angeordnet ist und
--- der, insbesondere mittels eines Antriebs (27), um eine Schwenkachse (28) in der Gehäuseausnehmung (25) verschwenkbar ist,
-- einem in dem Gehäuse (24) ausgebildeten und in die Gehäuseausnehmung (25) mündenden Eintrittskanal (29) zum Zuführen der Schmelze (23) zu dem Ventil-Drossel-Schwenkkörper (26),
-- mindestens zwei in dem Gehäuse (24) ausgebildeten und in die Gehäuseausnehmung (25) mündenden Austragskanälen (31, 38; 31, 38, 55) zum Austragen der Schmelze (23) aus dem Gehäuse (24), und
-- mindestens zwei Durchgangskanälen (30, 37), die zum Verbinden des Eintrittskanals (29) mit jeweils einem der mindestens zwei Austragskanäle (31, 38; 31, 38, 55) in dem Ventil-Drossel-Schwenkkörper (26) ausgebildet sind,
- Zuführen der Schmelze (23) in den Eintrittskanal (29), wobei die Schmelze (23) in einer Anfahr-Schwenkstellung des Ventil-Drossel-Schwenkkörpers (26) durch einen ersten Durchgangskanal (30) zu einem ersten Austragskanal (31) strömt,
- Verschwenken des Ventil-Drossel-Schwenkkörpers (26) um die Schwenkachse (28) in eine Betriebs-Schwenkstellung, und
- Zuführen der Schmelze (23) in den Eintrittskanal (29), wobei die Schmelze (23) in der Betriebs-Schwenkstellung des Ventil-Drossel-Schwenkkörpers (26) durch einen zweiten Durchgangskanal (37) zu einem zweiten Austragskanal (38) strömt.

2. Verfahren nach Anspruch 1, **dadurch gekennzeichnet,**
**dass** eine Eintrittsöffnung (33) des ersten Durchgangskanals (30) in der Anfahr-Schwenkstellung zumindest deckungsgleich mit einer Austrittsöffnung (32) des Eintrittskanals (29) ist und/oder eine Austrittsöffnung (34) des ersten Durchgangskanals (30) in der Anfahr-Schwenkstellung zumindest deckungsgleich mit einer Eintrittsöffnung (35) des ersten Austragskanals (31) ist.

3. Verfahren nach Anspruch 1 oder 2, **dadurch gekennzeichnet,**
**dass** eine Eintrittsöffnung (39) des zweiten Durchgangskanals (37) in der Betriebs-Schwenkstellung zumindest deckungsgleich mit einer Austrittsöffnung (32) des Eintrittskanals (29) ist und/oder eine Austrittsöffnung (40) des zweiten Durchgangskanals (37) in der Betriebs-Schwenkstellung zumindest deckungsgleich mit einer Eintrittsöffnung (41) des zweiten Austragskanals (38) ist.

4. Verfahren nach einem der Ansprüche 1 bis 3, **dadurch gekennzeichnet,**
**dass** die Schmelze (23) in einer Übergangs-Schwenkstellung des Ventil-Drossel-Schwenkkörpers (26) zwischen der Anfahr-Schwenkstellung und der Betriebs-Schwenkstellung von dem Eintrittskanal (29) in den ersten Durchgangskanal (30) und den zweiten Durchgangskanal (37) strömt.

5. Verfahren nach einem der Ansprüche 1 bis 4, **dadurch gekennzeichnet,**
**dass** eine Eintrittsöffnung (33) des ersten Durchgangskanals (30) in einer Anfahr-Drossel-Schwenkstellung des Ventil-Drossel-Schwenkkörpers (26) eine Austrittsöffnung (32) des Eintrittskanals (29) teilweise überdeckt und/oder eine Austrittsöffnung (34) des ersten Durchgangskanals (30) in einer Anfahr-Drossel-Schwenkstellung des Ventil-Drossel-Schwenkkörpers (26) eine Eintrittsöffnung (35) des ersten Austragskanals (31) teilweise überdeckt.

6. Verfahren nach einem der Ansprüche 1 bis 5, **dadurch gekennzeichnet,**
**dass** eine Eintrittsöffnung (39) des zweiten Durchgangskanals (37) in einer Betriebs-Drossel-Schwenkstellung des Ventil-Drossel-Schwenkkörpers (26) eine Austrittsöffnung (32) des Eintrittskanals (29) teilweise überdeckt und/oder eine Austrittsöffnung (40) des zweiten Durchgangskanals (37) in einer Betriebs-Drossel-Schwenkstellung des Ventil-Drossel-Schwenkkörpers (26) eine Eintrittsöffnung (41) des zweiten Austragskanals (38) teilweise überdeckt.

7. Verfahren nach einem der Ansprüche 1 bis 6, **dadurch gekennzeichnet,**
**dass** der Eintrittskanal (29) in einer Sperr-Schwenkstellung durch den Ventil-Drossel-Schwenkkörper (26) verschlossen ist.

8. Verfahren nach einem der Ansprüche 1 bis 7, **dadurch gekennzeichnet,**
**dass** in dem zweiten Durchgangskanal (37) ein Filterelement (52) angeordnet ist und die Schmelze (23) beim Durchströmen des zweiten Durchgangskanals (37) gefiltert wird.

9. Verfahren nach Anspruch 8, **dadurch gekennzeichnet,**
**dass** in einer Reinigungs-Schwenkstellung des Ventil-Drossel-Schwenkkörpers (26) die Schmelze (23) in einer Rückwärtsrichtung durch den zweiten Durchgangskanal (37) strömt und das Filterelement (52) reinigt.

10. Anfahrventil-Drossel-Vorrichtung zum Austragen einer Schmelze mit
- einem Gehäuse (24) und einer darin ausgebildeten Gehäuseausnehmung (25),
- einem Ventil-Drossel-Schwenkkörper (26),
-- der in der Gehäuseausnehmung (25) angeordnet ist und
-- der, insbesondere mittels eines Antriebs (27), um eine Schwenkachse (28) in der Gehäuseausnehmung (25) verschwenkbar ist,
- einem in dem Gehäuse (24) ausgebildeten und in die Gehäuseausnehmung (25) mündenden Eintrittskanal (29) zum Zuführen der Schmelze (23) zu dem Ventil-Drossel-Schwenkkörper (26), und
- mindestens zwei in dem Gehäuse (24) ausgebildeten und in die Gehäuseausnehmung (25) mündenden Austragskanälen (31, 38; 31, 38, 55) zum Austragen der Schmelze (23) aus dem Gehäuse (24),
**dadurch gekennzeichnet,**
**dass** in dem Ventil-Drossel-Schwenkkörper (26) mindestens zwei Durchgangskanäle (30, 37) zum Verbinden des Eintrittskanals (29) mit jeweils einem der mindestens zwei Austragskanälen (31, 38; 31, 38, 55) ausgebildet sind, und
**dass** der Ventil-Drossel-Schwenkkörper (26) in Richtung der Schwenkachse (28) fest angeordnet ist.

11. Anfahrventil-Drossel-Vorrichtung nach Anspruch 10, **dadurch gekennzeichnet,**
**dass** die mindestens zwei Durchgangskanäle (30, 37) jeweils eine Eintrittsöffnung (33, 39) haben und ein Abstand (d) von zwei benachbarten Eintrittsöffnungen (33, 39) kleiner als eine Abmessung (D) einer Austrittsöffnung (32) des Eintrittskanals (29) ist.

12. Anfahrventil-Drossel-Vorrichtung nach Anspruch 10 oder 11, **dadurch gekennzeichnet,**
**dass** der Ventil-Drossel-Schwenkkörper (26) mindestens einen Verschlussbereich (47, 48; 47, 48, 51) zum Verschließen des Eintrittskanals (29) hat.

13. Anfahrventil-Drossel-Vorrichtung nach mindestens einem der Ansprüche 10 oder 12, **dadurch gekennzeichnet,**
**dass** in mindestens einem der Durchgangskanäle (37) ein Filterelement (52) angeordnet ist.

14. Anfahrventil-Drossel-Vorrichtung nach einem der Ansprüche 10 bis 13, **dadurch gekennzeichnet,**
**dass** in dem Ventil-Drossel-Schwenkkörper (26) mindestens ein Hilfskanal (49, 50; 54) ausgebildet ist, der seitlich in mindestens einen der Durchgangskanäle (37) mündet.

15. Anlage zur Aufbereitung von Schüttgut mit
- einer Schneckenmaschine (3) zum Aufschmelzen des Schüttguts (2) und Bereitstellen einer Schmelze (23) und
- einer Anfahrventil-Drossel-Vorrichtung (4) nach einem der Ansprüche 10 bis 14.
